# EUROPEAN PATENT APPLICATION

(11) **EP 4 160 873 A1**
(43) Date of publication of application: **05.04.2023**
(21) Application number: 22186871.4
(22) Date of filing: 26.07.2022
(51) Int. Cl.: H02K 1/2787, H02K 9/06, H02K 21/22

(54) **OUTER ROTOR MOTOR**

(30) Priority: 29.09.2021 KR 20210128703
(71) Applicant: LG Electronics Inc., Yeongdeungpo-gu Seoul 150-721 (KR)
(72) Inventor: SUNG, Changwoo, Seoul 06772 (KR); KIM, Kyunghwan, Seoul 06772 (KR); KIM, Minjung, Seoul 06772 (KR)
(74) Representative: Vossius & Partner Patentanwälte Rechtsanwälte mbB

(57) **Abstract**

An outer rotor motor is provided. The outer rotor motor according to an aspect of the present disclosure may comprise a frame, a stator disposed on the frame, a coil wound around the stator, a rotating shaft rotatably coupled to a central region of the frame, a cover coupled to the rotating shaft and surrounding the stator, and a magnet disposed on the cover and facing the stator. In this case, an inner surface of the cover includes a plurality of blades protruding inward and extending in a radial direction.

## Description

### CROSS-REFERENCE TO RELATED APPLICATION

This application claims priority to and the benefit of Korean Patent Application No. 10-2021-0128703 filed in the Korean Intellectual Property Office on September 29, 2021, the entire contents of which are incorporated herein by reference.

### BACKGROUND OF THE INVENTION

### Field of the Invention

The present disclosure relates to an outer rotor motor. In more detail, the present disclosure relates to an outer rotor motor for an air conditioner.

### Description of the Related Art

In general, an air conditioner is a device that creates a more comfortable indoor environment for users, and may control at least one of temperature, humidity, and cleanliness of air. For example, the indoor air is adjusted to a pleasantly clean state by adjusting a cool cooling state in summer and a warm heating state in winter, and adjusting the indoor humidity.

In detail, a refrigerant cycle is provided inside the air conditioner, and a phase-changed refrigerant and external air exchange heat through the refrigerant cycle. The refrigerant cycle includes a compressor that compresses refrigerant to high temperature and high pressure, a condenser in which the refrigerant passing through the compressor exchanges heat with outdoor air, an expander in which the refrigerant passing through the condenser expands to a low temperature and low pressure, and an evaporator in which the refrigerant passing through the expander exchanges heat with the indoor air. Here, when the air conditioner is used as a cooler, the condenser corresponds to an outdoor heat exchanger, and the evaporator corresponds to an indoor heat exchanger.

And, as is well known, the air conditioner may be roughly divided into a separate -type air conditioner in which an outdoor unit and an indoor unit are installed separately, and an integrated-type air conditioner in which the outdoor unit and the indoor unit are installed integrally, and may be divided into a small-capacity air conditioner and a large-capacity air conditioner according to the size of the capacity.

Recently, as large buildings such as large restaurants and hotels are built, the need for large air conditioners or multi-type air conditioners is increasing. The large air conditioner or multi-type air conditioner is equipped with an outer rotor motor.

In the outer rotor motor, a stator having a coil wound therein is installed, and a rotor is disposed on the outside of the stator as if a magnet surrounds the coil of the stator. That is, the outer rotor motor is mainly used in large-capacity air conditioners because the inertia is significantly increased because the rotor is disposed on the outside of the outer rotor motor to rotate due to the structure of the outer rotor motor.

The outer rotor motor uses a cooling wheel, a cooling fan, and a flow guide for heat dissipation, so the number of parts is large. Accordingly, there is a problem in that the fastening structure of the parts is complicated and the size of the outer rotor motor is increased.

### [Prior technical literature]

**(Patent Document 1)** Korean Patent Publication No. 10-2020-0068887 A (published on June 16, 2020)

### SUMMARY OF THE INVENTION

The problem to be solved by the present disclosure is to provide an outer rotor motor capable of reducing the number of unnecessary parts.

In addition, the problem to be solved by the present disclosure is to provide an outer rotor motor capable of reducing the size of the product by simplifying the fastening structure of the parts.

An outer rotor motor according to an aspect of the present disclosure for achieving the above object may comprise a frame, a stator disposed on the frame, a coil wound around the stator, a rotating shaft rotatably coupled to a central region of the frame, a cover coupled to the rotating shaft and surrounding the stator, and a magnet disposed on the cover and facing the stator. In this case, an inner surface of the cover may include a plurality of blades protruding inward and extending in a radial direction.

Through this, it is possible to increase the heat dissipation effect without a configuration such as a cooling wheel, a cooling fan and a flow guide, so it is possible to reduce the number of parts. In addition, it is possible to reduce the size of the product by simplifying the fastening structure of the parts.

In addition, the plurality of blades may protrude rearward in an axial direction from the inner surface of the cover.

In addition, at least a portion of the plurality of blades may face the coil and may be spaced apart from each other in the axial direction.

In addition, at least a portion of the plurality of blades may protrude further rearward in the axial direction toward an inside or an outside in the radial direction in a region other than a region facing the coil.

In addition, the plurality of blades may have a constant distance from the coil in a region facing the coil.

In addition, the plurality of blades may be in contact with a side surface portion of the cover.

In addition, the plurality of blades may have a curvature in a region in contact with the side surface portion of the cover.

In addition, the plurality of blades may be formed to be concave forward in the axial direction in the region in contact with the side surface portion of the cover.

In addition, when viewed from a front or a rear in the axial direction, the plurality of blades may have a curvature as a whole.

In addition, when viewed from a front or a rear in the axial direction, the plurality of blades may be formed to be convex in a rotational direction of the cover.

In addition, when viewed from a front or a rear in the axial direction, the plurality of blades may be formed to be concave in a rotational direction of the cover.

In addition, the plurality of blades may be spaced apart from each other in a circumferential direction.

An outer rotor motor according to an aspect of the present disclosure for achieving the above object may comprise a frame, a stator disposed on the frame, a coil wound around the stator, a rotating shaft rotatably coupled to a central region of the frame, a cover coupled to the rotating shaft and surrounding the stator, and a magnet disposed on the cover and facing the stator. In this case, an inner surface of the cover may include a plurality of ribs protruding inward.

Through this, it is possible to increase the heat dissipation effect without a configuration such as a cooling wheel, a cooling fan and a flow guide, so it is possible to reduce the number of parts. In addition, it is possible to reduce the size of the product by simplifying the fastening structure of the parts.

In addition, the plurality of ribs may protrude rearward in an axial direction from the inner surface of the cover.

In addition, the plurality of ribs may be formed in a region facing the coil, and may be spaced apart from the coil in an axial direction.

In addition, the plurality of ribs may be spaced apart from a side surface portion of the cover in an axial direction.

In addition, the plurality of ribs may be spaced apart from each other in a circumferential direction.

Through the present disclosure, it is possible to provide an outer rotor motor capable of reducing the number of unnecessary parts.

In addition, through the present disclosure, it is possible to provide an outer rotor motor capable of reducing the size of the product by simplifying the fastening structure of the parts.

### BRIEF DESCRIPTION OF THE DRAWINGS

FIG. 1 is a perspective view of an outer rotor motor according to an embodiment of the present disclosure.
FIG. 2 is a cross-sectional view of an outer rotor motor according to an embodiment of the present disclosure.
FIG. 3 is an enlarged view of part A of FIG. 2.
FIG. 4 is a perspective view of a partial region of a cover of an outer rotor motor according to an embodiment of the present disclosure.
FIG. 5 is a rear view of a partial region of a cover of an outer rotor motor according to an embodiment of the present disclosure.
FIGS. 6 to 11 are modified examples of a partial region of a cover of an outer rotor motor according to an embodiment of the present disclosure.
FIG. 12 is a diagram illustrating a fluid flow of an outer rotor motor according to the prior art.
FIG. 13 is diagram illustrating a fluid flow of an outer rotor motor according to an embodiment of the present disclosure.
FIG. 14 is a graph illustrating a temperature of a coil according to the number of a plurality of ribs of an outer rotor motor according to an embodiment of the present disclosure.
FIG. 15 is a graph illustrating a temperature of a coil and a magnet according to a shape of a plurality of blades of an outer rotor according to an embodiment of the present disclosure.

### DETAILED DESCRIPTION OF THE EMBODIMENTS

Hereinafter, embodiments disclosed in the present disclosure will be described in detail with reference to the accompanying drawings, however, regardless of the reference numerals, the same or similar components will be given the same reference numerals and redundant description thereof will be omitted.

In describing the embodiments disclosed in the present disclosure, when a component is referred to as being "connected" or "accessed" to other component, it may be directly connected or accessed to the other component, however, it may be understood that other components may be present in the middle.

In addition, in describing the embodiments disclosed in the present disclosure, when it is determined that the detailed description of the related known technology may obscure the subject matter of the embodiments disclosed in the present disclosure, the detailed description thereof will be omitted. In addition, the accompanying drawings are only for easily understanding the embodiments disclosed in the present disclosure, the technical spirit disclosed in the present disclosure is not limited by the accompanying drawings, and it should be understood that the accompanying drawings include all changes, equivalents, and substitutes included in the spirit and scope of the present disclosure.

On the other hand, terms of disclosure may be replaced with terms such as document, specification, description.

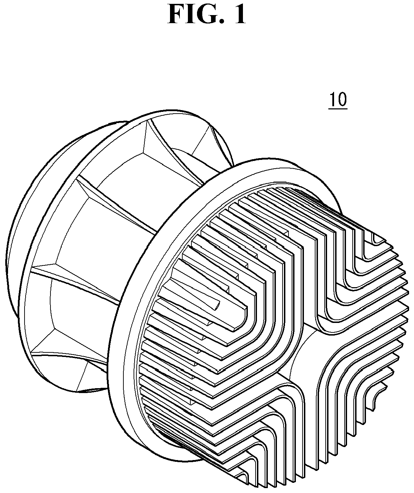

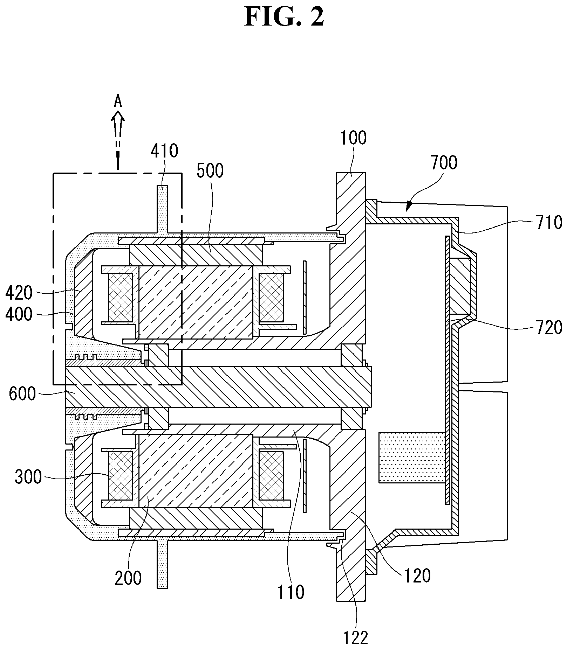

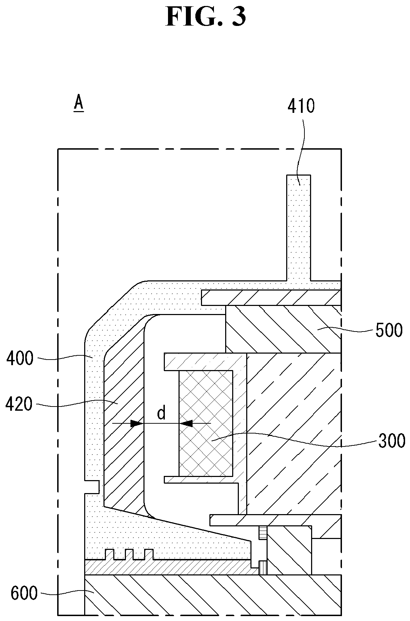

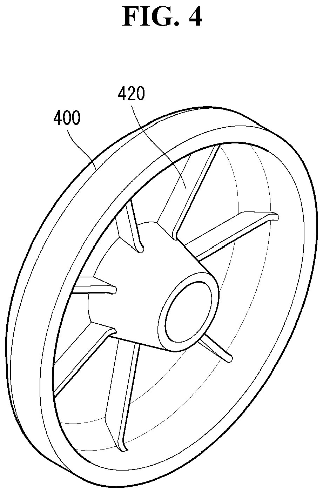

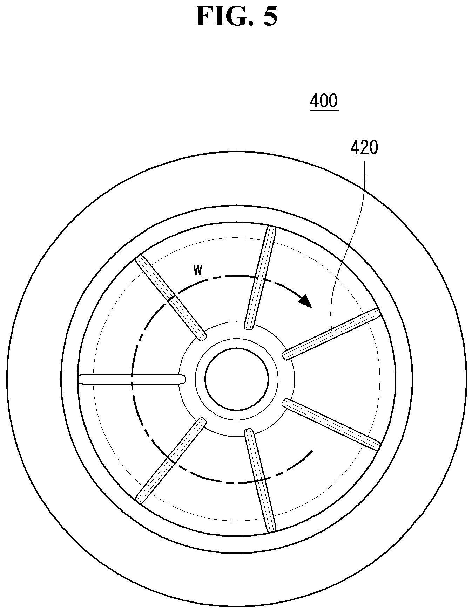

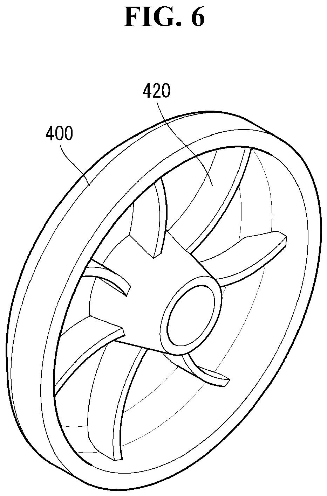

FIG. 1 is a perspective view of an outer rotor motor according to an embodiment of the present disclosure. FIG. 2 is a cross-sectional view of an outer rotor motor according to an embodiment of the present disclosure. FIG. 3 is an enlarged view of part A of FIG. 2. FIG. 4 is a perspective view of a partial region of a cover of an outer rotor motor according to an embodiment of the present disclosure. FIG. 5 is a rear view of a partial region of a cover of an outer rotor motor according to an embodiment of the present disclosure. FIGS. 6 to 11 are modified examples of a partial region of a cover of an outer rotor motor according to an embodiment of the present disclosure.

Referring to FIGS. 1 to 5, an outer rotor motor 10 according to an embodiment of the present disclosure may includes a frame 100, a stator 200, a coil 300, a cover 400, a magnet 500, and a rotating shaft 600, and a controller 700, but may be implemented except for some of the configurations, and does not exclude additional configurations.

In one embodiment of the present disclosure, it may be understood that the left side refers to a front in an axial direction and the right side refers to a rear in the axial direction with reference to FIG. 2, and the axial direction may be understood to mean a left-right direction in which the rotating shaft 600 extends with reference to FIG. 2.

The frame 100 may be disposed at the rear of the cover 400. The stator 200, the coil 300, the magnet 500, and the rotating shaft 600 may be disposed between the frame 100 and the cover 400. The controller 700 may be coupled to the rear surface of the frame 100.

The frame 100 may include a coupling portion 110. The coupling portion 110 may extend in the axial direction. The coupling portion 110 may include a long hole formed in the central region and extending in the axial direction. The rotating shaft 600 may be disposed in the long hole of the coupling portion 110. The rotating shaft 600 may be rotatably coupled to the coupling portion 110. The rotating shaft 600 may be bearing-coupled to the coupling portion 110.

The frame 100 may include a flange portion 120. The flange portion 120 may extend in a radial direction from the rear of the coupling portion 110. The controller 700 may be coupled to the rear surface of the flange portion 120. The cover 400 may be disposed in front of the flange portion 120. The flange portion 120 may include a groove 122 in which a rear end of the cover 400 is disposed. Through this, it is possible to prevent the cover 400 from being separated to the outside by rotation.

The stator 200 may be disposed on the frame 100. The stator 200 may be disposed on the coupling portion 110 of the frame 100. The stator 200 may be disposed on an outer circumferential surface of the coupling portion 110 of the frame 100. The stator 200 may be formed in a cylindrical shape. Alternatively, the stator 200 may be formed of a plurality of stator units spaced apart in a circumferential direction. The stator 200 may face the magnet 500. The stator 200 may be disposed inside the magnet 500. The stator 200 may be spaced apart from the magnet 500 by a predetermined distance. The stator 200 may be fixed to the coupling portion 110 of the frame 100.

The coil 300 may be disposed on the stator 200. The coil 300 may be wound around the stator 200. The coil 300 may be electrically connected to the controller 700.

The cover 400 may be formed in a shape in which the rear surface is opened. The cover 400 may be coupled to the rotating shaft 600. The central region of the front surface of the cover 400 may be penetrated by the rotating shaft 600. The rotating shaft 600 may be coupled to the central region of the front surface of the cover 400. The cover 400 may surround the stator 200 and the coil 300. The side surface of the cover 400 may surround the stator 200 and the coil 300. The magnet 500 may be disposed on the cover 400. The magnet 500 may be coupled to the inside of a side surface portion of the cover 400. The rear end of the cover 400 may be disposed in the groove 122 of the flange portion 120 of the frame 100. The rear end of the side surface portion of the cover 400 may be disposed in the groove 122 of the flange portion 120 of the frame 100.

The cover 400 may include a fan bracket 410. The fan bracket 410 may extend in the radial direction from an outer circumferential surface of the cover 400. The fan bracket 410 may extend in the radial direction from the outside of the side surface portion of the cover 400. Although the fan bracket 410 is described as an example formed integrally with the cover 400, it may be made of a separate member and coupled to the cover 400. The fan bracket 410 may be coupled to a fan 20 disposed in front of the outer rotor motor 10. The fan bracket 410 may be disposed axially forward than an axially central region of the rotating shaft 600. The fan bracket 410 may be disposed axially forward than an axially central region of the stator 200.

The cover 400 may include a plurality of blades 420. The plurality of blades 420 may be formed on an inner surface of the cover 400. The plurality of blades 420 may be formed on the inner surface of a front surface portion of the cover 400. The plurality of blades 420 may protrude rearward from the inner surface of the cover 400. The plurality of blades 420 may extend in the radial direction. At least a portion of the plurality of blades 420 may face the coil 300 wound around the stator 200. At least the portion of the plurality of blades 420 may be spaced apart from the coil 300 in the axial direction. The plurality of blades 420 may be spaced apart from each other in the circumferential direction. A distance between adjacent blades 420 may be equal to each other.

Through this, when the cover 400 rotates in the circumferential direction, the plurality of blades 420 may generate a flow of fluid between the inside of the cover 400 and the coil 300 and the stator 200. That is, it is possible to improve the heat dissipation performance of inner parts of the cover 400 by convection. Since it is possible to increase the heat dissipation effect without a separate configuration such as a cooling wheel, a cooling fan and a flow guide, it is possible to reduce the number of parts of the outer rotor motor 10. In addition, it is possible to reduce the size of the outer rotor motor 10 by simplifying the fastening structure of the parts.

The plurality of blades 420 may have a constant axial distance from the coil 300 in a region facing the coil 300. At least a portion of the plurality of blades 420 may maintain a minimum separation distance d from the coil 300. For example, the minimum separation distance d between at least the portion of the plurality of blades 420 and the coil 300 may be 10 mm or more. Through this, even when the plurality of blades 420 are formed of a metal material, the influence on the magnetic field of the coil 300 may be minimized.

At least a portion of the plurality of blades 420 may protrude further reward in the axial direction toward an inside or an outside in the radial direction in a region other than the region facing the coil 300. Through this, it is possible to further generate the flow of the fluid between the inner surface of the cover 400 and the coil 400, thereby improving the heat dissipation performance of the parts disposed in the cover 400.

The plurality of blades 420 may be in contact with the side surface portion of the cover 400. The plurality of blades 420 may have a curvature in a region in contact with the side surface of the cover 400. Specifically, referring to FIG. 3, the plurality of blades 420 may be formed to be concave forward in the axial direction in a region where the plurality of blades 420 are adjacent to the side surface portion of the cover 400. Through this, while generating a flow of fluid between the inner surface of the cover 400 and the coil 400, it is possible to minimize the output loss of the outer rotor motor 10 by minimizing the flow resistance of the fluid. The plurality of blades 420 may be integrally formed with the front surface portion of the cover 400. The plurality of blades 420 may be formed by a die casting method.

Referring to FIGS. 4 and 5, the plurality of blades 420 may extend in the radial direction. When viewed from a front or a rear in the axial direction, the plurality of blades 420 may not have curvature. When viewed from the front or rear in the axial direction, the plurality of blades 420 may be formed in a straight shape. In this case, it can be called a 'Radial' blade. When viewed from the front or rear in the axial direction, an imaginary straight line passing through the plurality of blades 420 may pass through the central region of the rotating shaft 600.

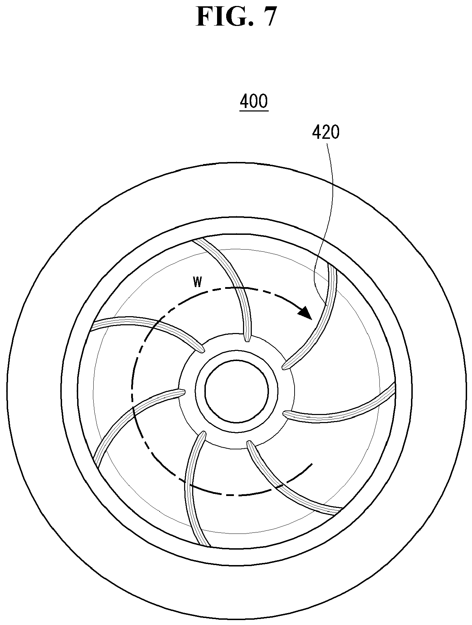

Referring to FIGS. 6 and 7, when viewed from the front or rear in the axial direction, the plurality of blades 420 may have a curvature as a whole. When viewed from the front or rear in the axial direction, the plurality of blades 420 may be formed to be convex in a rotational direction w of the cover 400. This case can be called a 'Forward' blade. When the plurality of blades 420 are formed to be convex in the rotational direction w of the cover 400, it is possible to improve the heat dissipation performance of the parts disposed in the cover 400 by further generating a flow of fluid between the inner surface of the cover 400 and the coil 400.

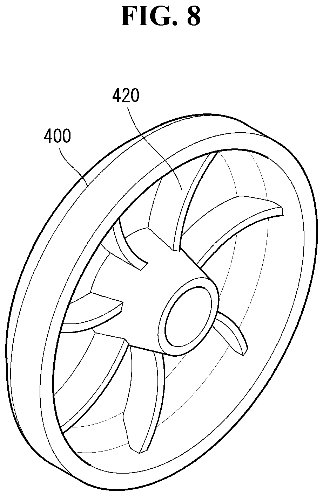

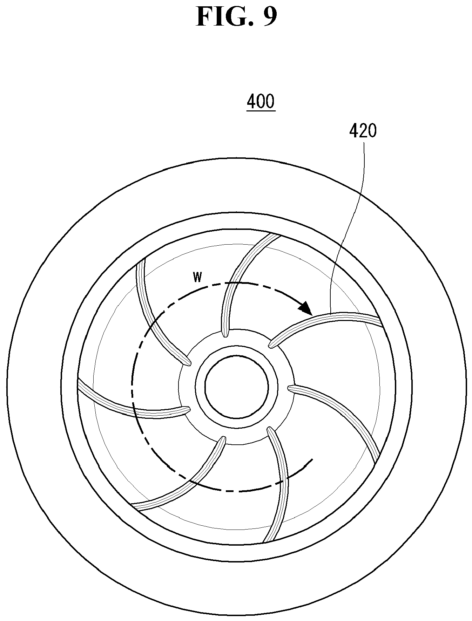

Referring to FIGS. 8 and 9, when viewed from the front or rear in the axial direction, the plurality of blades 420 may have a curvature as a whole. When viewed from the front or rear in the axial direction, the plurality of blades 420 may be formed to be concave in the rotational direction w of the cover 400. This case can be called a 'Backward' blade. When the plurality of blades 420 are formed to be concave in the rotational direction w of the cover 400, the heat dissipation performance may be lower than that of the forward blade, but the flow resistance of the fluid through the plurality of blades 420 is reduced. Through this, while generating the flow of the fluid between the inner surface of the cover 400 and the coil 400, it is possible to minimize the output loss of the outer rotor motor 10 by minimizing the flow resistance of the fluid.

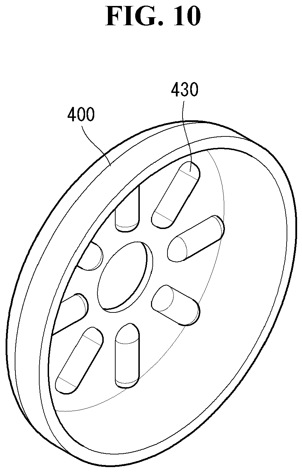

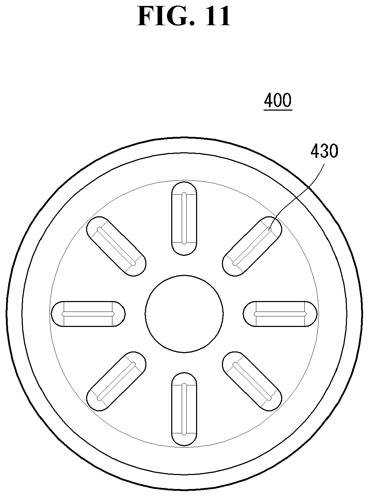

Referring to FIGS. 10 and 11, the cover 400 may include a plurality of ribs 430. That is, in the embodiment of FIGS. 10 and 11, it may be understood that the plurality of ribs 430 are formed instead of the plurality of blades 420 in the embodiment of FIGS. 2 to 9.

The plurality of ribs 430 may be formed on the inner surface of the cover 400. The plurality of ribs 430 may be formed on the inner surface of the front surface portion of the cover 400. The plurality of ribs 430 may protrude rearward from the inner surface of the cover 400. The plurality of ribs 430 may be spaced apart from the side surface portion of the cover 400.

The plurality of ribs 430 may extend in the radial direction. At least a portion of the plurality of ribs 430 may face the coil 300 wound around the stator 200. At least a portion of the plurality of ribs 430 may be spaced apart from the coil 300 in the axial direction. The plurality of ribs 430 may be spaced apart from each other in the circumferential direction. A distance between adjacent ribs 430 may be equal to each other.

Through this, when the cover 400 rotates in the circumferential direction, the plurality of ribs 430 may generate a flow of fluid between the inside of the cover 400 and the coil 300 and the stator 200. That is, it is possible to improve the heat dissipation performance of inner parts of the cover 400 through convection. Since it is possible to increase the heat dissipation effect without a separate configuration such as a cooling wheel, a cooling fan and a flow guide, it is possible to reduce the number of parts of the outer rotor motor 10. In addition, it is possible to reduce the size of the outer rotor motor 10 by simplifying the fastening structure of the parts.

The plurality of ribs 430 may have a constant axial distance from the coil 300 in a region facing the coil 300. At least a portion of the plurality of ribs 430 may maintain a minimum separation distance from the coil 300. For example, the minimum distance between at least the portion of the plurality of ribs 430 and the coil 300 may be 10 mm or more. Through this, even when the plurality of ribs 430 are formed of a metal material, the influence on the magnetic field of the coil 300 can be minimized.

The plurality of ribs 430 may be integrally formed with the front surface portion of the cover 400. The plurality of ribs 430 may be manufactured by a deep drawing method. The plurality of ribs 430 may be formed of the same metal material as the cover 400. The plurality of ribs 430 are disadvantageous in forming a flow of fluid compared to the plurality of blades 420, but may bring efficiency to increase the heat dissipation area.

The magnet 500 may be disposed on the cover 400. The magnet 500 may be disposed on the inner surface of the cover 400. The magnet 500 may face the stator 200. The magnet 500 may be disposed to surround the stator 200. The magnet 500 may rotate the cover 400, the rotating shaft 600, and the fan 20 in the circumferential direction through electromagnetic interaction with an electric field generated in the stator 200 due to the coil 300.

The rotating shaft 600 may be rotatably coupled to the frame 100. The rotating shaft may be rotatably coupled to a radially central region of the frame 100. The rotating shaft 600 may be rotatably coupled to the coupling part 110 of the frame 100. For example, the rotating shaft 600 may be bearing-coupled to the coupling portion 110 of the frame 100.

The rotating shaft 600 may be coupled to the fan 20. The front region of the rotating shaft 600 may be coupled to the fan 200. The rotating shaft 600 may pass through the cover 400. The rotating shaft 600 may pass through the central region of the front surface portion of the cover 400. The rotating shaft 600 may be coupled to the front surface portion of the cover 400. Through this, the rotating shaft 600 may rotate integrally with the cover 400.

The controller 700 may be coupled to the frame 100. The controller 700 may be electrically connected to the coil 300. The controller 700 may be coupled to the rear surface of the flange portion 120 of the frame 100. The controller 700 may include a coupling member 710 coupled to the rear surface of the flange portion 120 of the frame 100 and a substrate 720 disposed on the coupling member 710 and electrically connected to the coil 300. The substrate 720 may be a printed circuit board (PCB). A heat sink capable of dissipating heat generated by the controller 700 may be installed on the rear surface of the controller 700.

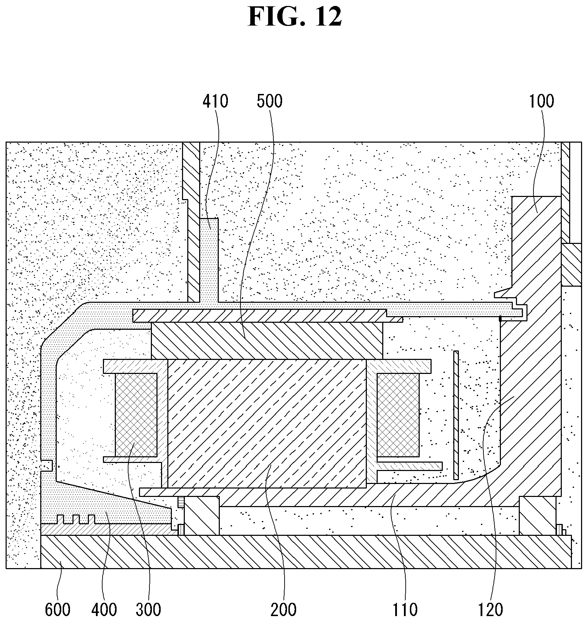

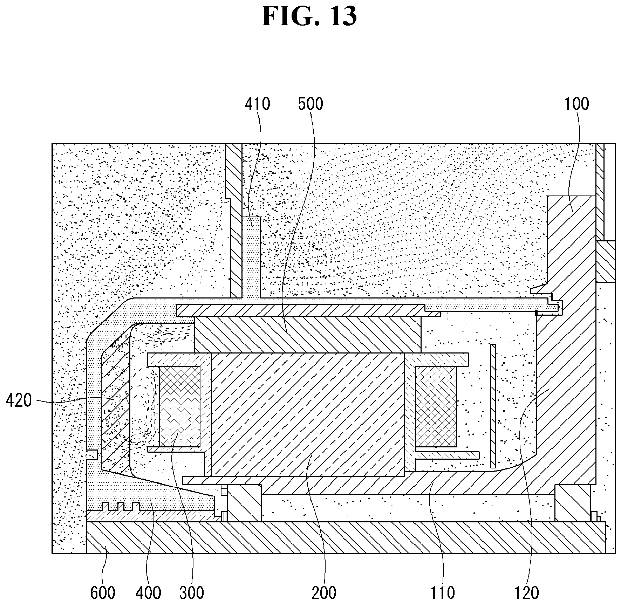

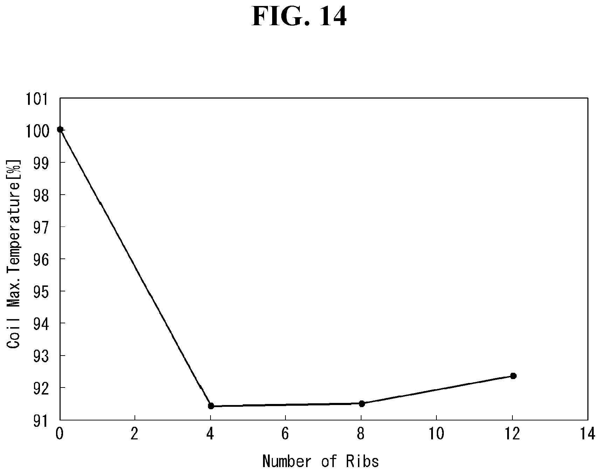

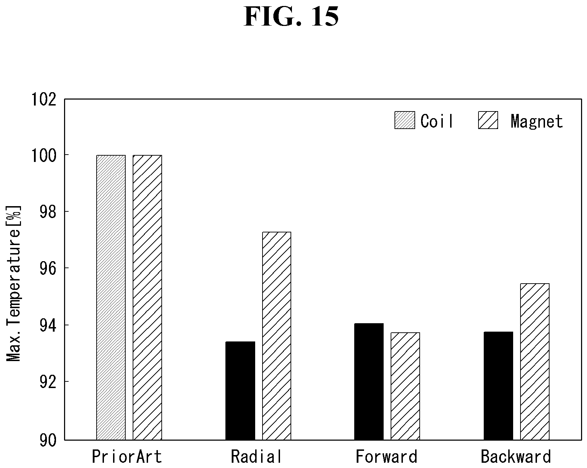

FIG. 12 is a diagram illustrating a fluid flow of an outer rotor motor according to the prior art. FIG. 13 is a diagram illustrating a fluid flow of an outer rotor motor according to an embodiment of the present disclosure. FIG. 14 is a graph illustrating a temperature of a coil according to the number of a plurality of ribs of an outer rotor motor according to an embodiment of the present disclosure. FIG. 15 is a graph illustrating a temperature of a coil and a magnet according to a shape of a plurality of blades of an outer rotor according to an embodiment of the present disclosure.

Referring to FIG. 12, in the case of the outer rotor motor according to the prior art, the flow of fluid hardly occurs between the inner surface of the cover 400 and the coil 300.

Referring to FIG. 13, it can be seen that in the case of the outer rotor motor 10 according to an embodiment of the present disclosure, the flow of fluid occurs more smoothly between the inner surface of the cover 400 and the coil 300 compared to the prior art. That is, the outer rotor motor 10 according to an embodiment of the present disclosure may improve the heat dissipation performance of the cover 400 and the inner parts of the cover 400 by convection.

Referring to FIG. 14, it can be seen that when the number of the plurality of ribs 430 according to FIGS. 10 and 11 is 4 or more, the temperature of the coil 300 rapidly drops. Therefore, in one embodiment of the present disclosure, the number of the plurality of ribs 430 is preferably 4 or more.

Referring to FIG. 15, it can be seen that in the case of a plurality of blades 430, the temperature of the coil 300 and the magnet 500 drops sharply compared to the prior art.

In the case of the Radial blade according to FIGS. 2 to 5, it can be seen that the temperature of the coil 300 and the magnet 500 is reduced compared to the prior art, and in the case of the Forward blade according to FIGS. 6 and 7, it can be seen that the heat dissipation performance is further improved as the temperature of the magnet 500 drops sharply compared to the Radial blade.

In the case of the other Backward blades in FIGS. 8 and 9, the heat dissipation performance is somewhat lower than that of the Forward blade, but there is an advantage that can reduce the output loss of the outer rotor motor 10.

Since the outer rotor motor 10 according to an embodiment of the present disclosure can increase the heat dissipation effect without a separate configuration such as a cooling wheel, a cooling fan and a flow guide, it is possible to reduce the number of parts of the outer rotor motor 10. In addition, it is possible to reduce the size of the outer rotor motor 10 by simplifying the fastening structure of the parts.

Some or other embodiments of the present disclosure described above are not exclusive or distinct from one another. Some or other embodiments of the present disclosure described above may be used in combination or combined with each configuration or function.

For example, it means that configuration A described in specific embodiments and/or drawings and configuration B described in other embodiments and/or drawings may be combined. In other words, even when the combination between the components is not described directly, it means that the combination is possible except when it is described as not possible to combine.

The above detailed description should not be construed as limiting in all respects and should be considered as illustrative. The scope of the present disclosure should be determined by reasonable interpretation of the appended claims, and all changes within the equivalent scope of the present disclosure are included in the scope of the present disclosure.

## Claims

1. An outer rotor motor comprising:
a frame (100);
a stator (200) disposed on the frame (100);
a coil (300) wound around the stator (200);
a rotating shaft (600) rotatably coupled to a central region of the frame (100), the axis of the rotating shaft (600) defining an axial direction, the rotating shaft (600) extending in front-rear direction of the outer rotor motor;
a cover (400) coupled to the rotating shaft (600) and surrounding the stator (200); and
a magnet (500) disposed on the cover (400) and facing the stator (200),
wherein an inner surface of the cover (400) includes a plurality of blades (420) protruding inward and extending in a radial direction with reference to the axis of the rotating shaft (600).

2. The outer rotor motor of claim 1, wherein each of the plurality of blades (420) protrude rearward in an axial direction from the inner surface of the cover (400).

3. The outer rotor motor of claim 2, wherein at least a portion of each of the plurality of blades (420) faces the coil (300) and is spaced apart from the coil (300) in the axial direction by a distance d.

4. The outer rotor motor of claim 3, wherein at least a portion of each of the plurality of blades (420) protrude further rearward in the axial direction toward an inside or an outside in the radial direction in a region other than a region facing the coil (300).

5. The outer rotor motor of claim 3, wherein each of the plurality of blades (400) has a constant distance d from the coil (300) in a region facing the coil (300).

6. The outer rotor motor of claim 2, wherein the plurality of blades (420) are in contact with a side surface portion of the cover (400).

7. The outer rotor motor of claim 6, wherein each of the plurality of blades (420) has a curvature in a region in contact with the side surface portion of the cover (400).

8. The outer rotor motor of claim 7, wherein each of the plurality of blades (420) is formed to be concave forward in the axial direction in the region in contact with the side surface portion of the cover (400).

9. The outer rotor motor of any one of claims 1 to 8, wherein when viewed from a front or a rear in the axial direction, the plurality of blades (420) have a curvature as a whole.

10. The outer rotor motor of any one of claims 1 to 9, wherein when viewed from a front or a rear in the axial direction, the plurality of blades (420) are formed to be convex in a rotational direction of the cover (400).

11. The outer rotor motor of any one of claims 1 to 9, wherein when viewed from a front or a rear in the axial direction, the plurality of blades (420) are formed to be concave in a rotational direction of the cover (400).

12. The outer rotor motor of any one of claims 1 to 11, wherein the plurality of blades (420) are spaced apart from each other in a circumferential direction..
